# EUROPÄISCHE PATENTSCHRIFT

(11) **EP 1 832 093 B1**
(45) Veröffentlichungstag und Bekanntmachung des Hinweises auf die Patenterteilung: **19.10.2011**
(21) Anmeldenummer: 05821788.6
(22) Anmeldetag: 22.12.2005
(51) Int. Cl.: H04M 1/24, H04W 24/06

(54) **TESTGERÄT ZUM EINSATZ IN EINEM TESTSYSTEM ZUR ÜBERPRÜFUNG VON ÜBERTRAGUNGSVORGÄNGEN INNERHALB EINES MOBILFUNKNETZES**
TESTING APPARATUS USED IN A TESTING SYSTEM FOR CHECKING TRANSMISSION PROCESSES IN A MOBILE RADIO COMMUNICATION NETWORK
APPAREIL TEST UTILISE DANS UN SYSTEME TEST VERIFIANT DES PROCESSUS DE TRANSMISSION DANS UN RESEAU DE RADIOCOMMUNICATIONS MOBILE

(30) Priorität: 28.12.2004 DE 102004062963
(43) Veröffentlichungstag der Anmeldung: 12.09.2007
(73) Patentinhaber: Keynote Systems, Inc., San Mateo, CA 94404 (US)
(72) Erfinder: LÖHLEIN, Martin, 90530 Wendelstein (DE); BERGMANN, Reinhard, 91126 Schwabach (DE)
(74) Vertreter: Hofmann, Matthias
(86) Internationale Anmeldenummer: PCT/EP2005/013878
(87) Internationale Veröffentlichungsnummer: WO 2006/069735

(56) Entgegenhaltungen:
- WO-A-00/69196
- WO-A-2004/049746

## Beschreibung

Die Erfindung betrifft ein Testgerät zum Einsatz in einem Testsystem zur Überprüfung von Übertragungsvorgängen innerhalb eines Mobilfunknetzes nach dem Oberbegriff des Anspruches 1.

Ein derartiges Testgerät sowie ein Testsystem, in dem dieses zum Einsatz kommen kann, sind bekannt aus der WO 2004/049 746 A1. Obwohl mit diesem bekannten Testsystem ein recht praxisnahes Testverfahren möglich ist, besteht der Bedarf, das Testverfahren weiter zu flexibilisieren.

Es ist daher die Aufgabe der vorliegenden Erfindung, ein Testgerät der eingangs genannten Art derart weiterzubilden, dass bei dessen Einsatz in einem Testsystem zur Überprüfung von Übertragungsvorgängen innerhalb eines Mobilfunknetzes eine größere Flexibilität der beim Testverfahren eingesetzten SIM-Daten erzielt wird.

Diese Aufgabe ist erfindungsgemäß gelöst durch ein Testgerät mit den im Kennzeichnungsteil des Anspruches 1 angegebenen Merkmalen.

Erfindungsgemäß wurde erkannt, dass es trotz der Tatsache, dass beim Testgerät das Mobiltelefon schon mit einer SIM-Simulation kommunizieren kann, hierdurch die wahlweise Kommunikation des Mobiltelefons mit mindestens einer physikalischen SIM-Karte nicht ausgeschlossen ist. Mit dem erfindungsgemäßen Testgerät lässt sich das Testverfahren wahlweise mit Daten der SIM-Simulation oder mit Daten der physikalischen SIM-Karte durchführen. Auch eine Kombination dieser SIM-Daten ist möglich. Hierdurch ist die Flexibilität des Testgeräts beim Einsatz in einem Testverfahren deutlich erhöht.

Eine schaltbare Verbindung der Ein- und Ausgabeleitungen gemäß Anspruch 2 führt zur Möglichkeit einer direkten Datenkommunikation zwischen dem Mobiltelefon und der physikalischen SIM-Karte, ohne dass diese Datenkommunikation über den SIM-Simulationsrechner laufen muss. Bei bestimmten Tests lässt sich so der Einfluss des SIM-Simulationsrechners auf die Datenkommunikation zwischen der SIM-Karte und dem Mobiltelefon sicher ausschließen.

Eine Versorgung der physikalischen SIM-Karte über das Mobiltelefon gemäß Anspruch 3 ist elegant und vermeidet die Notwendigkeit einer zusätzlichen Spannungsquelle. Alternativ ist die Versorgung der SIM-Karte über eine externe Spannungsquelle möglich. Bei einer bevorzugten Ausgestaltung des Testgeräts kann, gesteuert über den SM-Simulationsrechner, zwischen den verschiedenen Spannungsquellen umgeschaltet werden.

Ein Überwachungsmodul nach Anspruch 4 ermöglicht die Kontrolle des Datenflusses zwischen der physikalischen SIM-Karte und dem Mobiltelefon, was zu Testzwecken sehr aufschlussreich ist. Fehlerquellen, die aufgrund von durch die Datenkommunikation zwischen der SIM-Karte und dem Mobiltelefon ausgelösten unerwünschten Effekten herrühren, können auf diese Weise erkannt werden.

Ein Emulationsmodul nach Anspruch 5 erhöht die Flexibilität der im Mobiltelefon im Rahmen des Testverfahrens zugeführten Daten nochmals erheblich. Der SIM-Simulationsrechner kann über das Emulationsmodul bestimmen, welche kommunikationsrelevanten Daten der SIM-Karte unterdrückt, verändert, erweitert oder ersetzt werden. Dies kann z. B. zur Beschleunigung des Testverfahrens, aber auch zum Testen bestimmter Szenarien dienen, die mit der physikalischen SIM-Karte nicht erreichbar sind.

Ein Kompatibilitätsmodul nach Anspruch 6 erlaubt die Durchführung des Testverfahrens auch dann, wenn eine Datenkommunikation mit einer zum Mobiltelefon inkompatiblen SIM-Karte erwünscht ist.

Eine Umschaltung der Spannungsversorgung nach Anspruch 7 ermöglicht auch die Einbeziehung physikalischer SIM-Karten, deren Versorgung z. B. über die interne Spannungsquelle des Mobiltelefons nicht möglich ist. Durch Bereitstellung mehrerer Versorgungsspannungspegel ergibt sich die Möglichkeit, verschiedenste physikalische SIM-Karten zu betreiben und in das Testgerät zu integrieren.

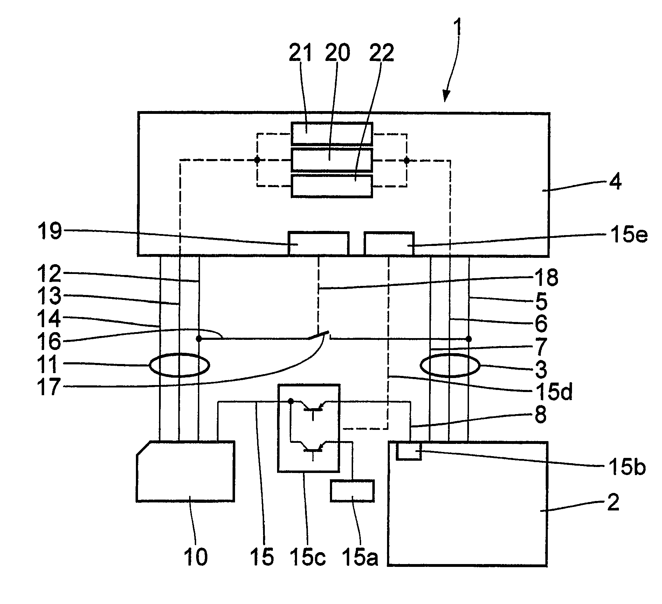

Ein Ausführungsbeispiel der Erfindung wird nachfolgend anhand der Zeichnung näher erläutert. Die einzige Figur zeigt schematische Komponenten eines Testgerätes zum Einsatz in einem Testsystem zur Überprüfung von Übertragungsvorgängen innerhalb eines Mobilfunknetzes.

Ein derartiges Testsystem zur Prüfung von Übertragungsvorgängen innerhalb eines Mobilfunknetzes ist bekannt aus der WO 2004/049 746 A1, auf die vollumfänglich Bezug genommen wird.

Das insgesamt mit 1 bezeichnete lokale Testgerät zum Einsatz in einem derartigen Testsystem umfasst ein Mobiltelefon 2. Das Mobiltelefon 2 kann mit einem Subscriber Identification Modul (SIM) kommunizieren. Dabei spielt es keine Rolle, ob es sich um eine physikalische SIM-Karte, also um eine reale Karte, oder um die Emulation bzw. Simulation einer derartigen SIM-Karte handelt.

Über eine mehrpolige Signalleitung 3 ist das Mobiltelefon 2 mit einem Microcontroller eines SIM-Simulationsrechners 4 verbunden. Der SIM-Simulationsrechner 4 stellt eine SIM-Simulation bereit. Der SIM-Simulationsrechner 4 ist dem Mobiltelefon 2 lokal zugeordnet. Er ist mit weiteren, nicht dargestellten Komponenten des Testsystems verbindbar.

Die Signalleitung 3 umfasst die üblichen Signalverbindungen eines Smartcard-Mobiltelefons, nämlich eine Ein- und Ausgabeleitung 5 (I/O), eine Taktversorgungsleitung 6 (CLK) und eine Reset-Leitung 7 (RST). Vom Mobiltelefon 2 geht weiterhin eine Versorgungsspannungsleitung 8 (Vcc) aus, deren Funktion noch beschrieben wird.

Weiterhin umfasst das Testgerät 1 eine physikalische SIM-Karte 10. Letztere ist über eine mehrpolige Signalleitung 11 mit dem Microcontroller des SIM-Simulationsrechners 4 verbunden. Die Signalleitung 11 umfasst ebenfalls eine Ein- und Ausgabeleitung 12 (I/O), eine Taktversorgungsleitung 13 (CLK) und eine Reset-Leitung 14 (RST). Über eine Versorgungsspannungsleitung 15 (Vcc) ist die SIM-Karte 10 mit einer externen Spannungsquelle 15a oder alternativ mit einer Spannungsquelle 15b des Mobiltelefons 2 verbunden. Die Auswahl, über welche der beiden Spannungsquellen 15a, 15b die SIM-Karte 10 versorgt wird, erfolgt über eine Transistorschaltung 15c, über die die Versorgungsspannungsleitung 15 einerseits mit der Versorgungsspannungsleitung 8 und andererseits mit der externen Spannungsquelle 15a verbunden ist. Die beiden Spannungsquellen 15a, 15b stellen insbesondere unterschiedliche Spannungspegel zur Verfügung. Über eine Steuerleitung 15d, die in der Figur gestrichelt dargestellt ist, ist die Transistorschaltung 15c mit einem Steuermodul 15e des Mikrocontrollers des SIM-Simulationsrechners 4 verbunden.

Die Ein- und Ausgabeleitungen 5, 12 sind miteinander über eine Verbindungsleitung 16 direkt verbunden. In letzterer ist ein Schalter 17 angeordnet, der über eine gestrichelt angedeutete Steuerleitung 18 mittels eines Steuermoduls 19 des Microcontrollers des SIM-Simulationsrechners 4 angesteuert werden kann. Dargestellt ist der Schalter 17 in der Offenstellung. In dieser ist keine direkte Datenkommunikation zwischen den Ein- und Ausgabeleitungen 5, 12 möglich.

Zur Überwachung einer Datenkommunikation zwischen der physikalischen SIM-Karte 10 und dem Mobiltelefon 2 weist der Microcontroller des SIM-Simulationsrechners 4 ein Überwachungsmodul 20 auf. Letzteres ist, wie gestrichelt dargestellt, mit den Signalleitungen 3 und 11 verbunden. Ferner weist der Microcontroller des SIM-Simulationsrechners 4 noch ein Emulationsmodul 21 und Kompatibilitätsmodul 22 auf.

Die lokale Datenkommunikation kann im Rahmen des Testverfahrens über die vom SIM-Simulationsrechner 4 bereit gestellte SIM-Simulation oder wahlweise mit der physikalischen SIM-Karte 10 erfolgen. Die lokale Datenkommunikation des Mobiltelefons 2 mit dem SIM-Simulationsrechner 4 erfolgt wie in der WO 2004/049 746 A1 beschrieben. Bei der wahlweisen lokalen Datenkommunikation des Mobiltelefons 2 mit der physikalischen SIM-Karte 10 sind mehrere Varianten möglich.

Bei einer dieser Varianten wird über das Steuermodul 19 und die Steuerleitung 18 der Schalter 17 geschlossen. Somit ist nun eine direkte Datenkommunikation zwischen dem Mobiltelefon und der SIM-Karte 10 möglich. Das RST-Signal erhält bei dieser Variante das Mobiltelefon 2 weiterhin vom Microcontroller des SIM-Simulationsrechners 4. Auch das Taktsignal wird vom Lesegerät des Mobiltelefons 2 weiterhin an den Microcontroller des SIM-Simulationsrechners 4 übermittelt. Letzterer stellt sicher, dass die SIM-Karte 10 das identische Taktsignal über die Taktversorgungsleitung 13 erhält.

Alternativ ist es zur Gewährleistung einer direkten Datenkommunikation möglich, anstelle der beiden Ein- und Ausgabeleitungen 5, 12 durch die Verbindungsleitung 16 die gesamten mehrpoligen Signalleitungen 3, 11 miteinander zu verbinden.

Bei einer weiteren Variante der Datenkommunikation zwischen dem Mobiltelefon 2 und der SIM-Karte 10 ist der Schalter 17 in Offenstellung und sämtliche Daten werden über die Signalleitungen 3 und 11 durch den Microcontroller des SIM-Simulationsrechners 4 geschleift. Dabei passieren die über die Signalleitungen 3, 11 gesendeten Signale das Überwachungsmodul 20, sodass dort die Datenkommunikation zwischen der SIM-Karte 10 und dem Mobiltelefon 2 überwacht werden kann. Die beiden vorstehend genannten Varianten können auch parallel zueinander durchgeführt werden.

Bei einer weiteren Variante der Datenkommunikation zwischen dem Mobiltelefon 2 und der SIM-Karte 10 werden alternativ oder zusätzlich die über die Signalleitungen 3 und 11 gesendeten Signale über das Emulationsmodul 21 geführt. Dieses kann je nach den Anforderungen des Testverfahrens bestimmte Kommunikationselemente der Datenkommunikation zwischen der SIM-Karte 10 und dem Mobiltelefon 2 unterdrücken und durch Kommunikationselemente einer Datenkommunikation zwischen der vom SIM-Simulationsrechner 4 bereit gestellten SIM-Simulation und dem Mobiltelefon 2 verändern, erweitern oder ersetzen. Zum Beispiel können bestimmte Speicherinhalte der SIM-Karte 10 nicht an das Mobiltelefon 2 übertragen werden oder durch andere Inhalte ersetzt werden.

Bei einer weiteren Variante der Datenkommunikation zwischen dem Mobiltelefon 2 und der SIM-Karte 10 werden alternativ oder zusätzlich die über die Signalleitungen 3, 11 geführten Daten über das Kompatibilitätsmodul 22 geführt. Dieses lässt eine Datenkommunikation zwischen der SIM-Karte 10 und dem Mobiltelefon 2 auch dann zu, wenn eine direkte Datenkommunikation zwischen der SIM-Karte 10 und dem Mobiltelefon 2 aufgrund einer Inkompatibilität zwischen diesen Komponenten nicht möglich ist. Beispielsweise kann im Kompatibilitätsmodul 22 eine Umsetzung von Datenformaten zwischen den von der SIM-Karte 10 bereit gestellten Daten einerseits und den vom Mobiltelefon 2 empfangbaren Datenformaten andererseits erfolgen. Auch eine Anpassung der Taktfrequenzen oder der Initialisierungsprozedur oder über das Steuermodul 15e der Versorgungsspannung ist möglich.

## Patentansprüche

1. Testgerät (1) zum Einsatz in einem Testsystem zur Überprüfung von Übertragungsvorgängen innerhalb eines Mobilfunknetzes,
- mit einem Mobiltelefon (2), welches derart ausgestaltet ist, dass es mit einem Subscriber Identification Modul, SIM, kommunizieren kann,
- mit einem dem Mobiltelefon (2) lokal zugeordneten SIM-Simulationsrechner (4) zur Bereitstellung einer SIM-Simulation, der mit weiteren Komponenten des Testsystems verbindbar ist,
**dadurch gekennzeichnet, dass** das Testgerät (1) weiterhin eine physikalische SIM-Karte (10) aufweist, die mit dem SIM-Simulationsrechner (4) derart verbunden ist, dass das Mobiltelefon (2) wahlweise über den SIM-Simulationsrechner (4) mit der SIM-Simulation oder mit der physikalischen SIM-Karte (10) kommunizieren kann.

2. Testgerät nach Anspruch 1, **dadurch gekennzeichnet, dass** eine Ein- und Ausgabeleitung (12) zwischen der physikalischen SIM-Karte (10) und dem SIM-Simulationsrechner (4) über einen vom SIM-Simulationsrechner (4) ansteuerbaren Schalter (17) mit einer Ein- und Ausgabeleitung (5) zwischen dem SIM-Simulationsrechner (4) und dem Mobiltelefon (2) verbunden ist.

3. Testgerät nach Anspruch 1 oder 2, **dadurch gekennzeichnet, dass** die physikalische SIM-Karte (10) mit einer Spannungsquelle (15a) des Mobiltelefons (2) verbunden ist.

4. Testgerät nach einem der Ansprüche 1 bis 3, **dadurch gekennzeichnet, dass** der SIM-Simulationsrechner (4) ein Überwachungsmodul (20) zur Überwachung einer Datenkommunikation zwischen der physikalischen SIM-Karte (10) und dem Mobiltelefon (2) aufweist.

5. Testgerät nach einem der Ansprüche 1 bis 4, **dadurch gekennzeichnet, dass** der SIM-Simulationsrechner (4) ein Emulationsmodul (21) aufweist, welches derart ausgeführt ist, dass es bestimmte Kommunikationselemente einer Datenkommunikation zwischen der physikalischen SIM-Karte (10) und dem Mobiltelefon (2) unterdrückt und durch Kommunikationselemente einer Datenkommunikation zwischen der SIM-Simulation und dem Mobiltelefon (2) ersetzt.

6. Testgerät nach einem der Ansprüche 1 bis 5, **dadurch gekennzeichnet, dass** der SIM-Simulationsrechner (4) ein Kompatibilitätsmodul (22) aufweist, welches derart ausgeführt ist, dass eine Datenkommunikation zwischen der physikalischen SIM-Karte (10) und dem Mobiltelefon (2) auch dann zugelassen ist, wenn eine direkte Datenkommunikation zwischen der physikalischen SIM-Karte (10) und dem Mobiltelefon (2) auf Grund einer Inkompatibilität zwischen diesen Komponenten nicht möglich ist.

7. Testgerät nach einem der Ansprüche 1 bis 6, **dadurch gekennzeichnet, dass** der SIM-Simulationsrechner (4) ein Steuermodul (15e) zur Ansteuerung eines Auswahlschalters (15c) zur Vorgabe einer von mehreren möglichen Spannungsquellen (15a, 15b) bzw. Spannungspegeln aufweist.

## Claims

1. Test device (1) for use in a test system for checking transmission procedures in a mobile communications network,
- with a mobile telephone (2) configured such that it is able to communicate with a subscriber identification module, SIM,
- with a SIM simulation processor (4) locally associated with the mobile telephone (2), to prepare a SIM simulation, the SIM simulation processor (4) being designed to be connected to other components of the test system,
**characterised in that** the test device (1) furthermore has a physical SIM card (10) connected to the SIM simulation processor (4) such that the mobile telephone (2) is able to communicate selectively via the SIM simulation or with the physical SIM card (10).

2. Test device according to claim 1, **characterised in that** an input and output line (12) between the physical SIM card (10) and the SIM simulation processor (4) is connected to an input and output line (5) between the SIM simulation processor (4) and the mobile telephone (2) via a switch (17) which may be activated by the SIM simulation processor (4).

3. Test device according to claim 1 or 2, **characterised in that** the physical SIM card (10) is connected to a voltage source (15a) of the mobile telephone (2).

4. Test device according to any one of claims 1 to 3, **characterised in that** the SIM simulation processor (4) has a monitoring module (20) for monitoring a communication of data between the physical SIM card (10) and the mobile telephone (2).

5. Test device according to any one of claims 1 to 4, **characterised in that** the SIM simulation processor (4) has an emulation module (21) configured such that it suppresses specific communication elements of a data communication between the physical SIM card (10) and the mobile telephone (2) and replaces them by communication elements of a data communication between the SIM simulation and the mobile telephone (2).

6. Test device according to any one of claims 1 to 5, **characterised in that** the SIM simulation processor (4) has a compatibility module (22) configured such that a communication of data is allowed between the physical SIM card (10) and the mobile telephone (2) even if a direct communication of data between the physical SIM card (10) and the mobile telephone (2) is impossible due to these components being incompatible.

7. Test device according to any one of claims 1 to 6, **characterised in that** the SIM simulation processor (4) has a control module (15e) to activate a selection switch (15c) for presetting one of a plurality of possible voltage sources (15a, 15b) or voltage levels.

## Revendications

1. Appareil test (1) pour l'utilisation dans un système test pour la vérification de processus de transmission dans un réseau de radiocommunication mobile,
- comprenant un téléphone mobile (2) qui est conçu de sorte qu'il est capable de communiquer avec un Subscriber Identification Modul, SIM,
- comprenant un ordinateur de simulation SIM (4) local, agencé avec le téléphone mobile (2), pour la préparation d'une simulation SIM, ordinateur qui peut être relié à d'autres composantes du système test,
**caractérisé en ce que** l'appareil test (1) présente en outre une carte SIM physique (10) qui est reliée avec le ordinateur de simulation SIM (4) de telle sorte que le téléphone mobile (2) puisse communiquer, par l'intermédiaire du ordinateur de simulation SIM (4), au choix, avec la simulation SIM ou avec la carte SIM physique (10).

2. Appareil test selon la revendication 1 **caractérisé en ce qu'**une ligne d'entrée et une ligne de sortie (12) entre la carte SIM physique (10) et 1' ordinateur de simulation SIM (4) sont reliées par l'intermédiaire d'un commutateur (17), pouvant être commandé par le ordinateur de simulation SIM (10), avec une ligne d'entrée et une ligne de sortie (5) entre le ordinateur de simulation SIM (4) et le téléphone mobile (2).

3. Appareil test selon les revendications 1 ou 2 **caractérisé en ce que** la carte SIM physique (10) est reliée à une source de tension (15a) du téléphone mobile (2).

4. Appareil test selon l'une des revendications de 1 à 3 **caractérisé en ce que** l'ordinateur de simulation SIM (4) présente un module de vérification (20) pour le surveillance d'une communication de données entre la carte SIM physique (10) et le téléphone mobile (2).

5. Appareil test selon l'une des revendications de 1 à 4 **caractérisé en ce que** l'ordinateur de simulation SIM (4) présente une module d'émulation (21) qui est conçu de telle manière qu'il asservisse des éléments de communication déterminés d'une communication de données entre la carte SIM physique (10) et le téléphone mobile (2) et les remplace par des éléments de communication d'une communication de données entre la simulation SIM et le téléphone mobile (2).

6. Appareil test selon l'une des revendications de 1 à 5 **caractérisé en ce que** l'ordinateur de simulation SIM (4) présente un module de compatibilité (22) qui est conçu de telle manière qu'une communication de données entre la carte SIM physique (10) et le téléphone mobile (2) est alors également permise lorsqu'une communication de données directe entre la carte SIM physique (10) et le téléphone mobile (2) n'est pas possible en raison d'une incompatibilité entre ces composants.

7. Appareil test selon l'une des revendications de 1 à 6 **caractérisé en ce que** l'ordinateur de simulation SIM (4) présente un module de commande (15e) pour l'initiation d'une commande d'un commutateur de choix (15c) pour la programmation de l'une parmi les plusieurs sources de tension (15a, 15b), respectivement les niveaux de tension possibles.
